Europäisches Patentamt

European Patent Office

Office européen des brevets

(19)

(11) Numéro de publication : **0 020 205**
**B1**

(12) **FASCICULE DE BREVET EUROPÉEN**

(45) Date de publication du fascicule du brevet :
**13.07.83**

(51) Int. Cl.³ : **H 04 L   7/02**

(21) Numéro de dépôt : **80400611.2**

(22) Date de dépôt : **06.05.80**

(54) **Dispositif de synchronisation d'un signal d'horloge et système de transmission de données synchrones comportant un tel dispositif.**

(30) Priorité : **01.06.79 FR 7914178**

(43) Date de publication de la demande :
**10.12.80 Bulletin 80/25**

(45) Mention de la délivrance du brevet :
**13.07.83 Bulletin 83/28**

(84) Etats contractants désignés :
**DE GB IT NL SE**

(56) Documents cités :
**FR A 2 301 964**
**GB A 1 122 790**
**US A 3 440 547**
**US A 3 562 661**

(73) Titulaire : **THOMSON-CSF**
**173, Boulevard Haussmann**
**F-75379 Paris Cedex 08 (FR)**

(72) Inventeur : **Dautremay, Alain**
**"THOMSON-CSF"-SCPI 173, Bld Haussmann**
**F-75379 Paris Cedex 08 (FR)**
Inventeur : **Boljevic, Jean-Marc**
**"THOMSON-CSF"-SCPI 173, Bld Haussmann**
**F-75379 Paris Cedex 08 (FR)**

(74) Mandataire : **Turlèque, Clotilde et al**
**THOMSON-CSF SCPI 173, Bld Haussmann**
**F-75379 Paris Cedex 08 (FR)**

# Dispositif de synchronisation d'un signal d'horloge et système de transmission de données synchrones comportant un tel dispositif

La présente invention concerne les dispositifs de synchronisation de signaux d'horloge, en particulier ceux qui équipent les systèmes de transmission de données synchrones.

Généralement la succession de données binaires est divisée en paquets de m bits (m entier ≥ 1). A chaque paquet correspond un élément de signal de durée égale à m fois la période bit, cet élément de signal étant choisi dans un ensemble de $2^m$ formes possibles. Les éléments de signaux sont transmis de façon consécutive à un rythme appelé « rythme baud ». Le passage d'un élément de signal au suivant sera appelé dans ce qui suit « transition du signal de données ».

Ces systèmes nécessitent de reconstituer à la réception un signal d'horloge locale restituant le rythme « baud » auquel des données binaires d'un message ont été émises. Ce signal d'horloge locale doit être asservi en fréquence et en phase sur le signal d'horloge d'émission, de manière à attribuer la valeur convenable aux bits de données à partir du signal de données reçu.

Une solution bien connue, par exemple du US-A-3 562 661, consiste à détecter les transitions du signal de données, et à diviser la fréquence d'un signal d'horloge issu d'un oscillateur fournissant une fréquence q fois plus élevée que la fréquence du signal d'horloge locale désirée, à l'aide d'un diviseur à nombre diviseur variable. La valeur de ce nombre diviseur variable est commandée par un signal de commande, fourni par un détecteur de la position des transitions du signal de données par rapport au front montant du signal d'horloge locale obtenu à la sortie du diviseur, afin de faire varier la fréquence et par suite la phase de ce signal d'horloge locale.

Cette méthode d'asservissement qui utilise les transitions du signal de données, n'est possible que lorsque des données sont présentes. Il en résulte que chaque nouvelle apparition de données nécessite une période d'acquisition préalable, permettant un calage en phase du signal d'horloge locale, suivie d'une période d'entretien de la synchronisation sur les transitions du signal de données tant que ce signal est présent. La période d'acquisition comporte un grand nombre de transitions de manière à réduire au minimum le temps nécessaire au calage en phase du signal d'horloge locale.

Mais un inconvénient de cette solution provient de la difficulté d'avoir une période d'acquisition à la fois courte et sûre. En effet une période d'acquisition courte ne pouvant se faire qu'avec un nombre limité de transitions, est moins sûre qu'une séquence d'acquisition qui utilise un grand nombre de transitions et permet un meilleur filtrage.

Un autre inconvénient est dû au ralentissement du temps de prise de synchronisation lorsque les transitions sont affectées d'un bruit de phase, et lorsque le point de départ du signal d'horloge locale, au moment où apparaissent les premières transitions, est en opposition de phase avec celle qu'il aurait après synchronisation.

Une autre méthode, utilisée dans le circuit du US-A-3 562 661, consiste à réaliser un prépositionnement du diviseur en utilisant l'une des premières transitions de données d'un message. Le prépositionnement étant effectué, l'asservissement de phase est entretenu sur les transitions du signal de données suivantes.

Cette solution présente l'intérêt d'être très rapide, mais n'est applicable que lorsque la qualité de la voie de transmission est suffisante pour ne pas transmettre d'impulsions parasites, ce qui n'existe pas dans la pratique.

La présente invention a pour objet de remédier à cet inconvénient à l'aide de moyens simples.

Selon l'invention, un dispositif de synchronisation d'un signal d'horloge locale par rapport à un signal de données comprenant un dispositif d'asservissement comportant un détecteur des transitions du signal de données couplé à un comparateur de phase situant la position des transitions par rapport au front montant du signal d'horloge locale, ce signal étant obtenu à partir d'un générateur comportant, en série, un oscillateur, un diviseur dont la valeur du nombre diviseur variable est commandée par les signaux obtenus à la sortie du comparateur de phase, et un diviseur fixe ayant une entrée d'initialisation et qui comporte en outre un circuit de synchronisation rapide qui prépositionne le diviseur fixe, est caractérisé en ce que ce circuit de synchronisation rapide (60) comprend des moyens de comptage ayant une entrée de signal couplée à la sortie du détecteur de transitions, une sortie couplée à l'entrée d'initialisation du diviseur fixe, et une entrée de commande de comptage couplée à la sortie du diviseur fixe, ces moyens de comptage comptant le nombre de coïncidences de n transitions successives reçues (n entier positif), avec chacun de k intervalles de temps distincts (k entier positif), de même durée fractionnant l'intégralité de chaque période du signal d'horloge locale, et délivrant une impulsion à partir de l'instant auquel p coïncidences (p entier positif) avec un des k intervalles de temps ont été dénombrées.

L'invention sera mieux comprise et d'autres caractéristiques apparaîtront à l'aide de la description et des schémas s'y rapportant sur lesquels :

la figure 1 est un schéma d'un mode de réalisation du dispositif de synchronisation selon l'invention ;

la figure 2 représente les diagrammes tension-temps de signaux permettant d'expliquer le fonctionnement du dispositif de la figure 1.

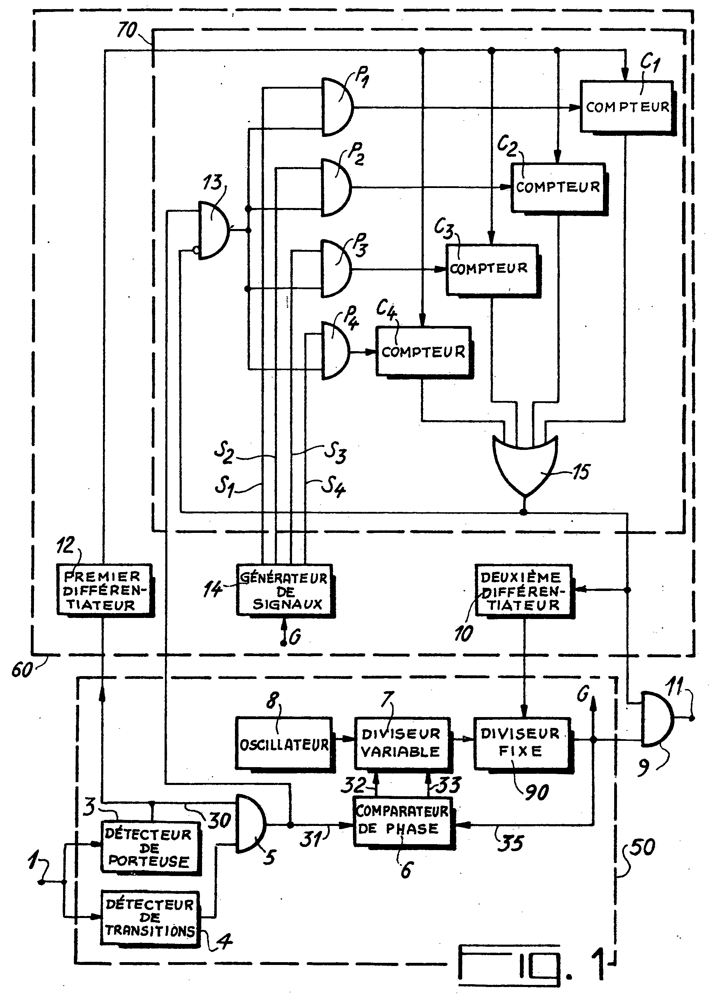

Sur la figure 1, un dispositif d'asservissement 50 possède une borne d'entrée 1 destinée à recevoir un signal modulé par les données d'un message, et une sortie reliée à une première entrée d'une porte ET, 9. Ce dispositif d'asservissement 50 comporte un détecteur de porteuse 3 couplant la borne 1 à une première entrée d'une porte ET, 5, dont la deuxième entrée est couplée à la borne 1, à travers un détecteur de transitions 4. La sortie de la porte ET, 5, est reliée à une première entrée 31 d'un comparateur de phase 6. Les sorties 32 et 33 de ce comparateur 6 sont respectivement connectées aux première et deuxième entrées de commande d'un diviseur variable 7, qui comporte une troisième entrée reliée à un oscillateur 8, et une sortie reliée à la première entrée de la porte ET, 9, à travers un diviseur fixe 90. La sortie de ce diviseur 90 est en outre reliée à une deuxième entrée 35 du comparateur de phase 6. La sortie de la porte ET, 9, est reliée à la borne de sortie 11.

Sur cette même figure, un circuit de synchronisation rapide 60, comporte des moyens de comptage 70 composés d'une porte ET, 13, de quatre portes ET, $P_i$ (i variant de 1 à 4), de quatre compteurs $C_i$ et d'une porte OU, 15. Le circuit 60 comporte en outre un premier différentiateur 12 couplant la sortie du détecteur 3 à chacune des entrées de remise à zéro des compteurs $C_i$, un deuxième différentiateur 10 couplant une entrée d'initialisation du diviseur fixe 90 à la sortie de la porte OU, 15, laquelle est reliée à une deuxième entrée de la porte ET, 9, et à une première entrée complémentée de la porte ET, 13. Enfin le circuit 60 comporte un générateur de signaux 14 ayant une entrée reliée à la sortie du diviseur fixe 90, et ayant quatre sorties $S_i$. Chaque sortie $S_i$ est reliée à une première entrée de la porte $P_i$ correspondante. Chacune des deuxièmes entrées des portes $P_i$ est reliée à la sortie de la porte ET, 13, dont la deuxième entrée est reliée à la sortie de la porte ET, 5. La sortie de chaque porte $P_i$ est reliée à la $i^e$ entrée correspondante de la porte OU, 15, à travers le compteur $C_i$ correspondant.

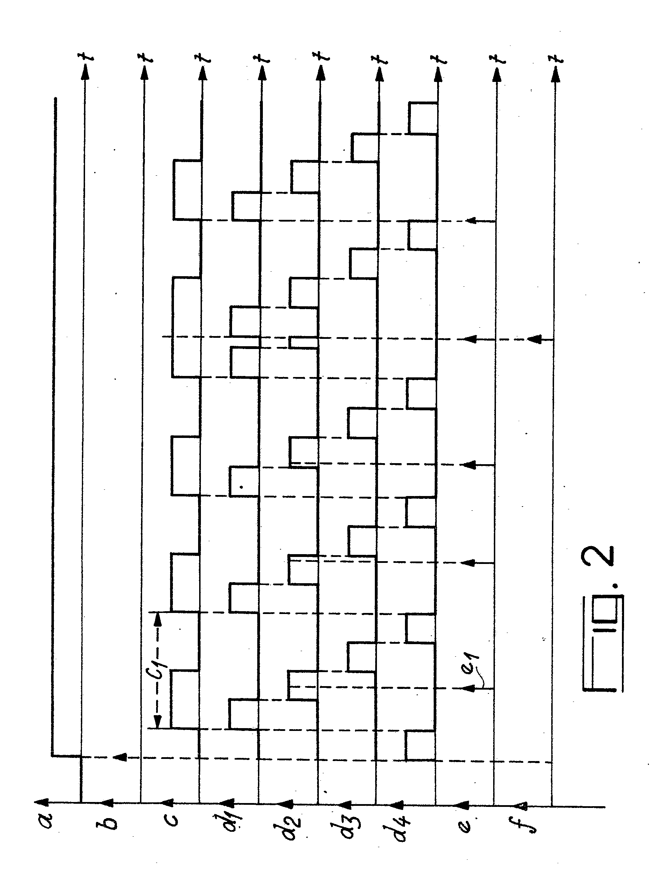

Le fonctionnement de ce dispositif de synchronisation sera mieux compris à l'aide des diagrammes tension-temps décrits sur la figure 2.

Sur cette figure sont représentés des signaux a, b, c, $d_1$, $d_2$, $d_3$, $d_4$, e, f, respectivement présents à la sortie du détecteur de porteuse 3, à la sortie du différentiateur 12, à la sortie du diviseur fixe 90, à la sortie $S_1$, à la sortie $S_2$, à la sortie $S_3$ et à la sortie $S_4$ du décodeur 14, à la sortie du détecteur de transitions 4, et à la sortie du différentiateur 10.

Le dispositif d'asservissement 50 étant bien connu, la description de son fonctionnement sera limité à ce qui est nécessaire à la compréhension de l'invention.

Le signal a est un signal logique 1, caractéristique de la présence de signaux reçus, il ouvre, pendant sa durée, la porte ET, 5, aux transitions de données fournies par le détecteur de transitions 4 et représentées par le signal e.

Dans l'exemple choisi, le diviseur constitué du diviseur variable 7 en série avec le diviseur fixe 90 a un rang de division, au repos, égal à 512, qui peut être porté à 511 ou 513 sous l'action de signaux respectivement appliqués sur les entrées 32 ou 33 du diviseur 7 (à raison d'une fois par période du rythme baud). La fréquence nominale de l'oscillateur 8 est, dans cet exemple, de 614,4 kHz et celle de sortie du diviseur 90, au repos (signal c) de 1 200 Hz, valeur de l'horloge rythmant les données reçues.

Le retard de phase $3\pi/4$, représenté sur la figure 2, de la première transition détectée $e_1$ par rapport au front montant de la première période $C_1$ du signal c est mesurée par le comparateur de phase 6 qui affecte alors au diviseur 7 le rang de division 511, une seule fois au cours de la période du rythme baud.

Si la fréquence de l'oscillateur est exacte, le calage en phase interviendra au bout de $135 \times 512/2 \times 180 = 192$ périodes environ soit un délai de 0,16 seconde.

Mais le dispositif de synchronisation rapide 60 selon l'invention va accélérer ce processus : le générateur 14 délivre quatre signaux périodiques $d_1$, $d_2$, $d_3$ et $d_4$ de même fréquence que le signal c mais dont la durée est égale à un quart de la période de ce signal c, et décalés chacun par rapport au suivant de $\pi/2$, le front montant du signal $d_1$ étant calé en phase avec le front montant du signal c.

Les portes $P_1$ à $P_4$ ne laissent respectivement passer les transitions du signal e que pendant la durée des signaux $d_1$ à $d_4$ et fournissent, en cas de coïncidence, un 1 logique permettant de caractériser la position des transitions par rapport au front montant du signal c. Étant donné le caractère incertain d'une seule mesure, à cause des effets du bruit de transmission, il est attendu que quatre coïncidences soient dénombrées par l'un des compteurs $C_0$ à $C_4$ pour prendre en compte la dernière coïncidence.

Sur la figure 2, il est vu que la première transition $e_1$ (après la mise en route) coïncide avec le signal $d_2$. La porte $P_2$ laisse passer cette transition et au bout de quatre transitions le compteur $C_2$ fournit un 1 logique qui, à travers la porte OU 15, provoque l'arrêt des compteurs $C_1$ à $C_4$ et, à travers le différentiateur 10, initialise le diviseur fixe 90 de telle sorte que le prochain front montant du signal d'horloge c se trouve situé au voisinage attendu de la prochaine transition de données.

Les compteurs $C_1$ et $C_4$ des moyens de comptage sont remis à zéro par une impulsion obtenue par différentiation du front montant du signal de sortie du détecteur 3, ce qui correspond à l'apparition de la porteuse du signal de données sur la borne 1. Cette différentiation est effectuée par le différentiateur 12.

L'efficacité du dispositif décrit a été mise en évidence. En effet une synchronisation du signal d'horloge locale a été obtenue en 4 à 7 périodes. Le signal de données contenait une transition du signal de données par période du signal d'horloge, la dispersion des transitions de données ne dépassait pas 1/4 de cette période.

Cette efficacité est conservée si la phase initiale du signal d'horloge locale est en opposition avec la phase obtenue après synchronisation.

L'invention n'est pas limitée au mode de réali-

0 020 205

sation décrit et représenté.

En particulier, les critères de choix des valeurs du nombre p de coïncidences pour déclencher les compteurs $C_i$, du nombre k de portes $P_i$ et de compteurs $C_i$, du rang de division q du diviseur 7 au repos sont les suivants :

Le choix de l'instant d'initialisation est d'autant plus juste que p est plus élevé. En contrepartie, comme il faut au minimum p coïncidences pour réaliser l'initialisation, p doit être choisi assez petit pour synchroniser le signal d'horloge locale en un temps court.

La précision de la synchronisation en phase, est d'autant meilleure que k est grand, la durée d'un signal $d_i$ étant inversement proportionnelle à k. Mais, pour des raisons de coût, il est nécessaire de limiter k.

Pour obtenir un signal d'horloge locale bien filtré il est nécessaire de choisir q de valeur élevée, la seule limitation vers les valeurs supérieures provient de la nécessité de compenser le décalage relatif des oscillateurs utilisés à l'émission et à la réception.

Dans l'exemple décrit, le générateur de signaux 14 est tel qu'il décompose une période du signal d'horloge locale en k intervalles de temps de durée égale, au pas de correction près T/q qui affecte le $k^e$ intervalle (T : période du signal d'horloge locale désirée). Cette influence, faible si q est grand devant k et p, peut être supprimée en maintenant le diviseur variable sur un rang de division fixe q avant l'initialisation.

Les signaux de commande $d_i$ ont été obtenus à la sortie du générateur de signaux 14, mais il est à la portée de l'homme de l'art d'obtenir ces signaux à partir des rangs de division du diviseur 90.

## Revendications

1. Dispositif de synchronisation d'un signal d'horloge locale par rapport à un signal de données comprenant un dispositif d'asservissement (50) comportant un détecteur (4) des transitions du signal de données couplé à un comparateur de phase (6) situant la position des transitions par rapport au front montant du signal d'horloge locale, ce signal étant obtenu à partir d'un générateur comportant, en série, un oscillateur (8), un diviseur (7) dont la valeur du nombre diviseur variable est commandée par les signaux obtenus à la sortie du comparateur de phase, et un diviseur fixe (90) ayant une entrée d'initialisation, qui comporte en outre un circuit de synchronisation rapide (60) qui prépositionne le diviseur fixe (90) caractérisé en ce que ce circuit de synchronisation rapide (60) comprend des moyens de comptage (70) ayant une entrée de signal couplée à la sortie du détecteur de transitions (4), une sortie couplée à l'entrée d'initialisation du diviseur fixe (90), et une entrée de commande de comptage couplée à la sortie du diviseur fixe (90), ces moyens de comptage (70) comptant le nombre de coïncidences de n transitions successives reçues (n entier positif), avec chacun de k intervalles de temps distincts (k entier positif), de même durée fractionnant l'intégralité de chaque période du signal d'horloge locale, et délivrant une impulsion à partir de l'instant auquel p coïncidences (p entier positif) avec un des k intervalles de temps ont été dénombrées.

2. Dispositif de synchronisation selon la revendication 1, caractérisé en ce que les moyens de comptage (70) comportent k compteurs $C_i$ (i variant de 1 à k), ayant chacun une sortie couplée à la sortie des moyens de comptage (70) à travers une porte OU (15) et ayant une entrée, et des moyens de commande couplant respectivement chacune des k entrées des compteurs $C_i$ à l'entrée de signal pendant l'un des k intervalles de temps, chacun des k compteurs s'incrémentant chaque fois qu'une transition du signal de données est présente à son entrée.

3. Dispositif de synchronisation selon la revendication 2, caractérisé en ce que les moyens de commande comportent k portes ET, $P_i$, ayant chacune une première entrée couplée à l'entrée de signal, une deuxième entrée, et une sortie, les k deuxièmes entrées étant respectivement couplées à k sorties d'un générateur de signaux (14) ayant une entrée couplée à la sortie du diviseur fixe (90), les k sorties délivrant un signal d'état logique 1 dont la présence coïncide respectivement avec celle des k intervalles, les k sorties des k portes ET, $P_i$, étant respectivement couplées aux k entrées des k compteurs $C_i$.

4. Dispositif de synchronisation selon l'une des revendications 2 et 3, caractérisé en ce que le dispositif d'asservissement (50) comporte un détecteur du signal de données (3), en ce que les k compteurs $C_i$ ont une entrée de commande commune de mise à zéro, et en ce que la sortie du diviseur fixe (90) est couplée à la sortie du dispositif de synchronisation à travers une première porte ET supplémentaire (9) ayant une entrée de commande couplée à la sortie des moyens de comptage (70) ; l'entrée de commande commune de mise à zéro étant couplée à la sortie du détecteur du signal de données (3) à travers un circuit différentiateur (12), et l'entrée de signal des moyens de comptage (70) étant couplée à la sortie du détecteur de transitions (4) à travers une deuxième porte ET supplémentaire (5) ayant une entrée de commande couplée à la sortie du détecteur du signal de données 3.

5. Système de transmission, caractérisé en ce qu'il comporte au moins un dispositif de synchronisation selon l'une des revendications précédentes.

## Claims

1. Device for the synchronization of a local clock signal with respect to a data signal, comprising a control device (50) including a data signal transition detector (4) coupled to a phase

4

comparator (6) determining the position of the transition with respect to the rising edge of the local clock signal, this signal being obtained from a generator comprising, in series, an oscillator (8), a divider (7) the variable divisor of which is controlled by the signals obtained at the output of the phase comparator, and a fixed divider (90) having an initialization input, and further comprising a rapid synchronization circuit (60), which presets the fixed divider (90), characterized in that the rapid synchronization signal (60) comprises counting means (70) having a signal input coupled to the output of the transition detector (4), an output coupled to the initialization input of the fixed divider (90) and a counting control input coupled to the output of the fixed divider (90), these counting means (70) counting the number of coincidences of n successive transitions received (n positive integer) with each of k distinct time intervals (k positive integer) of the same duration which divide each entire period of the local clock signal, and providing a pulse from the moment where p coincidences (p positive integer) with one of the k time intervals have been counted.

2. Synchronization device in accordance with claim 1, characterized in that the counting means (70) comprise k counters $C_i$ (i varying from 1 to k), each having an output coupled to the output of the counting means (70) through an OR gate (15) and having an input, and control means respectively coupling each of the k inputs of the counters $C_i$ to the signal input during one of the k time intervals, each of the k counters being incremented each time one transition of the data signal is presented at its input.

3. Synchronization device in accordance with claim 2, characterized in that the control means comprise k AND gates $P_i$ each having a first input coupled to the signal input, a second input and an output, the k second inputs being respectively coupled to k outputs of a signal generator (14) having an input coupled to the output of the fixed divider (90), the k outputs providing a signal of logic state 1 the presence of which is respectively coincident with that of the k intervals, the k outputs of the k AND gates $P_i$ being respectively coupled to the k inputs of the k counters $C_i$.

4. Synchronization device in accordance with any of claims 2 and 3, characterized in that the control device (50) comprises a data signal detector (3), that the k counters $C_i$ have a common zero reset control input and in that the output of the fixed divider (90) is coupled to the output of the synchronization device through a first additional AND gate (9) having a control input coupled to the output of the counting means (70) ; the common zero reset control input being coupled to the output of the data signal detector (3) through a differentiating circuit (12), and the signal input of the counting means (70) being coupled to the output of the transition detector (4) through a second additional AND gate (5) having a control input coupled to the output of the data signal detector (3).

5. Transition system, characterized in that it comprises at least one synchronization device in accordance with any of the preceding claims.

**Ansprüche**

1. Vorrichtung zum Synchronisieren eines lokalen Taktsignals in bezug auf ein Datensignal, mit einer Folgeregelungsvorrichtung (50), die einen Detektor (4) zur Erfassung der Übergänge des Datensignals umfaßt, welcher an einen Phasenkomparator (6) angekoppelt ist, der die Lage der Übergänge in bezug auf die Anstiegsflanke des lokalen Taktsignals feststellt, wobei dieses Signal durch einen Generator erhalten wird, der in Reihenschaltung einen Oszillator (8), einen Teiler (7), dessen variable Teilerzahl durch Signale gesteuert wird, die am Ausgang des Phasenkomparators erhalten werden, und einen Festteiler (90) umfaßt, der einen Initiierungseingang aufweist, und ferner mit einer schnellen Synchronisationsschaltung (60), die den Festteiler (90) voreinstellt, dadurch gekennzeichnet, daß die schnelle Synchronisationsschaltung (60) Zählmittel (70) umfaßt, die einen an den Ausgang des Übergangsdetektors (4) angekoppelten Signaleingang, einen an den Initiierungseingang des Festteilers (90) angekoppelten Ausgang und einen Zähl-Steuereingang aufweisen, welcher an den Ausgang des Festteilers (90) angeschlossen ist, wobei diese Zählmittel (70) die Anzahl von Koinzidenzen von n aufeinanderfolgenden erhaltenen Übergängen (n ganzzahlig positiv) mit jedem von k verschiedenen Zeitintervallen (k ganzzahlig positiv) derselben Dauer, welche jeweils eine vollständige Periode des lokalen Taktsignals unterteilen, zählen und einen Impuls ab dem Zeitpunkt abgeben, wo p Koinzidenzen (p ganzzahlig positiv) mit den k Zeitintervallen gezählt wurden.

2. Synchronisationsvorrichtung nach Anspruch 1, dadurch gekennzeichnet, daß die Zählmittel (70) k Zähler $C_i$ (i variiert von 1 bis k) umfassen, die jeweils einen mit dem Ausgang der Zählmittel (70) über eine OR-Schaltung (15) verbundenen Ausgang sowie einen Eingang aufweisen, und Steuermittel umfassen, die jeweils jeden der k Eingänge der Zähler $C_i$ mit dem Signaleingang während eines der k Zeitintervalle verbinden, wobei jeder der k Zähler jedesmal inkrementiert wird, wenn ein Übergang des Datensignals an seinem Eingang vorhanden ist.

3. Synchronisationsvorrichtung nach Anspruch 2, dadurch gekennzeichnet, daß die Steuermittel k AND-Schaltungen $P_i$ umfassen, die jeweils einen ersten an den Signaleingang angekoppelten Eingang, einen zweiten Eingang sowie einen Ausgang aufweisen, wobei die k zweiten Eingänge jeweils an die k Ausgänge eines Signalgenerators (14) angekoppelt sind, dessen Eingang mit dem Ausgang des Festteilers (90) verbunden ist, während die k Ausgänge ein Signal im Digitalzustand 1 abgeben, dessen Vorhandensein mit dem der k Intervalle jeweils zusammenfällt, und wobei die k Ausgänge der k AND-Schaltungen $P_i$ jeweils an die k Eingänge der k Zähler $C_i$ angekoppelt sind.

4. Synchronisationsvorrichtung nach einem der Ansprüche 2 und 3, dadurch gekennzeichnet, daß die Folgeregelvorrichtung (50) einen Datensignaldetektor (3) umfaßt, daß die k Zähler $C_i$ einen gemeinsamen Nullrücksetz-Steuereingang aufweisen und daß der Ausgang des Festteilers (90) mit dem Ausgang der Synchronisationsvorrichtung über eine erste zusätzliche AND-Schaltung (9) verbunden ist, die einen mit dem Ausgang der Zählmittel (70) verbundenen Steuereingang aufweist ; wobei der gemeinsame Nullrücksetz-Steuereingang an den Ausgang des Datensignaldetektors (3) über eine Differenzierschaltung (12) angekoppelt ist und der Signaleingang der Zählmittel (70) an den Ausgang des Übergangsdetektors (4) über eine zweite zusätzliche AND-Schaltung (5) angekoppelt ist, die einen mit dem Ausgang des Datensignaldetektors (3) verbundenen Steuereingang aufweist.

5. Übertragungssystem, dadurch gekennzeichnet, daß es wenigstens eine Synchronisationsvorrichtung nach einem der vorstehenden Ansprüche aufweist.

FIG. 1

Fig. 2

0 020 205